Europäisches Patentamt

European Patent Office

Office européen des brevets

(19)

(11) **EP 0 872 941 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.7: **H02J 3/18**

(21) Anmeldenummer: **98106735.8**

(22) Anmeldetag: **14.04.1998**

(54) **Verfahren zur zentralen Blindleistungskompensation in einem ein- oder mehrphasigen Wechselstromnetz und Vorrichtung zur Durchführung desselben**

Method for central reactive power compensation in a single phase or polyphase AC network and device for carrying out such method

Procédé pour la compensation centrale de la puissance réactive dans un réseau de courant alternatif monophasé ou polyphasé et dispositif pour la mise en oeuvre de tel procédé

(84) Benannte Vertragsstaaten:
**DE FR IT**

(30) Priorität: **15.04.1997 DE 19715547**

(43) Veröffentlichungstag der Anmeldung:
**21.10.1998 Patentblatt 1998/43**

(73) Patentinhaber: **FRAKO Kondensatoren- und Anlagenbau GmbH**
**79331 Teningen (DE)**

(72) Erfinder:
• **Mall, Hans-Georg**
**79336 Herbolzheim (DE)**

• **König, Alfred**
**79369 Whyl (DE)**

(74) Vertreter: **Goddar, Heinz J., Dr.**
**FORRESTER & BOEHMERT**
**Pettenkoferstrasse 20-22**
**80336 München (DE)**

(56) Entgegenhaltungen:
**DE-A- 2 609 967**    **DE-A- 3 005 185**
**DE-A- 3 148 060**    **JP-A- 8 251 824**

## Beschreibung

Die vorliegende Erfindung betrifft ein Verfahren zur zentralen Blindleistungskompensation in einem ein- oder mehrphasigen Wechselstromnetz, das mindestens zwei Verbraucher, die über jeweils eine Steuerung zu- und abgeschaltet werden, sowie gegebenenfalls einen oder mehrere weiteren/weitere Verbraucher speist, mittels mindestens zweier über jeweils einen elektronischen Schalter zu- und abschaltbarer Kompensationskondensatoren mit einer jeweiligen Kompensationsstufenleistung QC1 bzw. QC2, und eine Vorrichtung zur Durchführung desselben.

Punktschweißmaschinen werden z.B. im Karosseriebau in Produktionsstraßen eingesetzt. Jede Punktschweißmaschine weist eine relativ kurze Einschaltdauer von einigen 100 ms bis maximal mehrere Sekunden auf. Beim Einschalten einer Punktschweißmaschine wird ein hoher Blindstrom benötigt, der - je nach Kurzschlußleistung des Netzes - zu einem Spannungseinbruch führt. Eine Möglichkeit, diese kurzzeitigen Spannungseinbrüche zu vermeiden, besteht in der Kompensation der Blindleistung der Schweißtransformatoren mit Kondensatoren. Die Blindleistungskompensation kann dabei einzeln oder zentral durchgeführt werden. Bei der Einzelblindleistungskompensation wird jeder Punktschweißmaschine ein passender Kompensationskondensator parallelgeschaltet. Da die Punktschweißmaschinen heutzutage üblicherweise mit Thyristoren - zum Teil mit Phasen anschnittsteuerung - gesteuert werden, muß der Kompensationskondensator ebenfalls mit einem separaten Thyristorschalter im Spannungsnulldurchgang eingeschaltet werden, um den Einschaltstrom zu begrenzen. Es ist somit für jede Punktschweißmaschine ein passender Kompensationskondensator mit elektronischem Schalter erforderlich. Eine derartige Blindleistungskompensation ist schnell, aber kostenintensiv und ungenau.

Das Dokument DE-A-2609967 weist ein Verfahren zur zentralen blindleistungskompensation in einem mehrphasigen Wechselstromnetz mittels mindestens zwei er über jeweils einen elektronischen Schalter zu- und abschaltbarer Kompensationskondensatoren mit einer jeweiligen Kompensationsstufenleistung auf.

Das im Stand der Technik offenbarte Verfahren stützt sich auf die Messung der Gesamtblindleistung: beim Ansteigen der Blindleistung wird die am längsten abgeschalteten Kondensatorstufe zugeschaltet und bei den Abnahme der Blindleistung werden die am längsten zugeschalteten Kondensatorstufe abgeschaltet.

Eine zentrale Blindstromkompensation mit einem schnellen Blindleistungsregler ist zwar aufgrund der geringeren Anzahl von Schaltern kostengünstiger und genau aber langsam, da eine Blindleistungsregelung auch bei einem Blindleistungsregler, der innerhalb einer oder eineinhalb Netzperioden den Blindleistungsbedarf mißt, aufgrund der notwendigen Stabilität des Regelkreises erst nach ca. 50 bis 100 ms den Bindleistungsbedarf tatsächlich zu mehr als 90% ausgeregelt hat. Die Spannungseinbrüche werden aber nur wirksam unterdrückt, wenn praktisch gleichzeitig mit den Verbrauchern und nicht fünf und mehr Netzperioden später auch die erforderliche Blindleistungskompensation eingeschaltet wird.

Der Erfindung liegt somit die Aufgabe zugrunde, ein Verfahren und eine Vorrichtung der eingangs genannten Art zur Verfügung zu stellen, mit denen eine kostengünstige und schnelle Blindleistungskompensation möglich ist.

Erfindungsgemäß wird diese Aufgabe dadurch gelöst, daß

(a) vorab der Blindleistungsbedarf Q2, Q3, ..., Q8 jedes angesteuerten Verbrauchers und der maximale Gesamtblindleistungsbedarf unter Berücksichtigung des bzw. der gegebenenfalls weiteren Verbrauchers/Verbraucher zumindest näherungsweise bestimmt sowie eine zur Kompensation der Gesamtblindleistung geeignete Anzahl von Kompensationskondensatoren mit einer jeweiligen Kompensationsstufenleistung QC1 bzw. QC2 bzw. QC3 bzw. QC4 gewählt wird,

(b) die momentanen Schaltbefehle X2, X3, ..., X8 der Steuerungen für die angesteuerten Verbraucher erfaßt und damit. der momentane Gesamtblindleistungsbedarf $A_{ges}$ zumindest näherungsweise mittels des momentanen Blindleistungsbedarfs A der angesteuerten Verbraucher wie folgt bestimmt wird

$$A_{ges} = A = Q2 \cdot X2 + Q3 \cdot X3 + ... + Q8 \cdot X3,$$

mit X2, X3, ..., X8 = 1 (Zuschalten) oder 0 (Abschalten),

(c) eine Kombination der Kompensationskondensatoren über die jeweiligen elektronischen Schalter zugeschaltet wird, deren Summe der Kompensationsstufenleistungen QC1, QC2, QC3, QC4 dem in Schritt (b) bestimmten momentanen Gesamtblindleistungsbedarf $A_{ges}$ am nächsten kommt, und

(d) die Schritte (b) und (c) zur Anpassung an den variierenden Gesamtblindleistungsbedarf $A_{ges}$ wiederholt werden. Eine Kombination der Kompensationskondensatoren kann auch lediglich einen einzigen Kompensationskondensator umfassen.

Diese Aufgabe wird zudem bei einer Vorrichtung der eingangs genannten Art gelöst durch

- eine Erfassungseinrichtung zur Erfassung der Schaltbefehle X2, X3 von mindestens zwei Steuerungen zur Zu- und Abschaltung jeweils eines Verbrauchers,

- eine Auswerteeinrichtung zur Auswertung der Schaltbefehle X2, X3, ..., X8 hinsichtlich des zumindest näherungsweisen momentanen Gesamtblindleistungsbedarfs $A_{ges}$ und nachfolgenden Auswahl einer zur Kompensation des ermittelten momentanen Gesamtblindleistungsbedarfs $A_{ges}$ geeigneten Kombination von zuzuschaltenden Kompensationskondensatoren und

- eine Ansteuereinrichtung zur Ansteuerung der ansteuerbaren elektronischen Schalter für die Kompensationskondensatoren entsprechend der von der Auswerteeinrichtung getroffenen Auswahl.

Gemäß einer besonderen Ausführungsform des Verfahrens wird in Schritt (b) zusätzlich ein Blindleistungsregler mit mindestens zwei Ausgängen, die normalerweise jeweils zur Ansteuerung eines Kompensationskondensators über einen jeweiligen Schalter vorgesehen und hinsichtlich der Kompensationsleistung QR1 bzw. QR2 jedes Kompensationskondensators programmierbar sind, verwendet, der auf herkömmliche Weise über einen Stromwandler in der Wechselstromnetzzuleitung der Mittelwert des verbleibenden Blindleistungsbedarfs mißt,
die momentanen Schaltbefehle Y1, Y2, die normalerweise zur Ansteuerung einer zur Kompensation des von dem Blindleistungsregler ermittelten Mittelwerts des verbleibenden Blindleistungsbedarfs geeigneten Kombination der mindestens zwei Kompensationskondensatoren dienen, über die mindestens zwei Ausgänge erfaßt und bei der Bestimmung des momentanen Gesamtleistungsbedarfs $A_{ges}$ wie folgt berücksichtigt werden

$$A_{ges} = A + QR1 \cdot Y1 + QR2 \cdot Y2,$$

mit Y1, Y2 = 1 (Zuschalten) oder 0 (Abschalten).
Die zusätzliche Verwendung eines Blindleistungsreglers . ermöglicht es, den durch die Steuerung nicht kompensierten Blindleistungsbedarf zu kompensieren, der daraus resultieren kann, daß der Blindleistungsbedarf der einzelnen ansteuerbaren Verbraucher nur ungenau bekannt ist bzw. zum Beispiel aufgrund einer Phasenansteuerung um z.B. 10 bis 20% schwankt sowie weitere Verbraucher von dem Wechselstromnetz gespeist werden. Durch die überlagerte Blindleistungsregelung wird das erfindungsgemäße Verfahren hinsichtlich der Blindleistungkompensation noch genauer und damit stromkostensparender. Die unterschiedliche Schnelligkeit der Steuerung und überlagerten Regelung ist für eine wirksame Unterdrückung der Spannungsschwankungen ohne Belang, da diese in jedem Fall zu 80 bis 90% durch die verzögerungsfreie Steuerung ausgeglichen werden. Die überlagerte Regelung hat die Aufgabe, den gesamten restlichen mittleren Blindleistungsbedarf auszugleichen und soll deshalb auch wesentlich langsamer als die Steuerung sein und regelt z.B. im Bereich von mehreren Sekunden bis Minuten. Ein zweistufiger Blindleistungsregler mit einer Abstufung der Kompensationstufenleistungen von 1:2 hat bereits eine Auflösung von 1:3 und kann zur Regelung des von der Steuerung nicht kompensierten Blindleistungsbedarfs ausreichen.
Die weiteren Unteransprüche betreffen weitere besondere Ausführungsformen des erfindungsgemäßen Verfahrens.
Gemäß einer besonderen Ausführungsform der erfindungsgemäßen Vorrichtung kann vorgesehen sein, daß ein Kompensationskondensator eine Kompensationsstufenleistung QC1 = QC aufweist und mindestens zwei Kompensationskondensatoren eine jeweilige Kompensationsstufenleistung QC2 = QC3 = 2· QC aufweisen. Eine derartige Vorrichtung ist besonders kostengünstig, da für eine gewünschte Feinstufigkeit QC bei einer Gesamtkompensationsleistung von 3· QC und mehr weniger Schalter als bei einer Vorrichtung mit gleichgroßen Kompensationsstufenleistungen benötigt werden. Dieser Vorteil wird noch größer, wenn gemäß einer weiteren besonderen Ausführungsform der erfindungsgemäßen Vorrichtung drei Kompensationskondensatoren mit einer Abstufung der Kompensationsstufenleistungen von 1:2:2 bzw. 1:2:4 vor gesehen sind.
Ferner können vier Kompensationskondensatoren mit einer Abstufung der Kompensationsstufenleistungen von 1:2:4:4 vorgesehen sein.
Gemäß einer weiteren besonderen Ausführungsform kann vorgesehen sein, daß die programmierbaren Kompensätionsstufenleistungen QR1, QR2 des Blindleistungsreglers jeweils nicht größer als die kleinste Kompensationsstufenleistung QC1 bzw. QC2 bzw. QC3 bzw. QC4 der Kompensationskondensatoren sind. Z.B. kann die größte Kompensationsstufenleistung des Blindleistungsreglers QR1 bzw. QR2 der Hälfte der kleinsten Kompensationstufenleistung QC1 bzw. QC2 bzw. QC3 bzw. QC4 entsprechen. Dies ermöglicht eine genauere überlagerte Blindleistungsregelung.
Es bleibt jedoch festzuhalten, daß die Kompensationsstufenleistungen QR1 bzw. QR2 des Blindleistungsreglers grundsätzlich unabhängig von den Kompensationsstufenleistungen QC1 bzw. QC2 bzw. QC3 bzw. QC4 gewählt werden können.

Schließlich kann vorgesehen sein, daß die Kompensationsstufenleistungen QR1, QR2 abgestuft sind. Dies erhöht ebenfalls die Genauigkeit der überlagerten Blindleistungskompensationsregelung.

Der Erfindung liegt die überraschende Erkenntnis zugrunde, daß durch die zentrale Steuerung der Blindleistung Spannungsschwankungen verzögerungsfrei und im wesentlichen vollständig sowie aufgrund der geringen Schalterzahl kostengünstig unterdrückt werden.

Die besondere Ausführungsform der erfindungsgemäßen Vorrichtung mit einem integrierten Blindleistungsregler weist neben den bereits obengenannten Vorteilen der Verwendung eines Blindleistungsreglers den Vorteil auf, daß sie gegenüber einem separaten Blindleistungsregler, d.h. mit zugehörigen elektronischen Schaltern und Kompensationskondensatoren, preisgünstiger ist, da zum einen der Blindleistungsbedarf der Kompensationssteuerung und Regelung sich ausgleicht, d.h. die Summe des jeweiligen Bedarfs der beiden Kompensationsanlagen kleiner als die Summe der jeweiligen Bedarfsspitzen ist und zum anderen die Anzahl der benötigten Schalter kleiner als die Anzahl der Schalter bei zwei getrennten Vorrichtungen (Steuervorrichtung und Regelungsvorrichtung) ist.

Weitere Merkmale und Vorteile der Erfindung ergeben sich aus den Ansprüchen und aus der nachstehenden Beschreibung, in der zwei Ausführungsbeispiele anhand der schematischen Zeichnungen im einzelnen erläutert sind. Dabei zeigt:

Fig. 1    eine schematische Darstellung einer ersten Ausführungsform der erfindungsgemäßen Vorrichtung; und

Fig. 2    eine schematische Darstellung einer zweiten Ausführungsform der erfindungsgemäßen Vorrichtung.

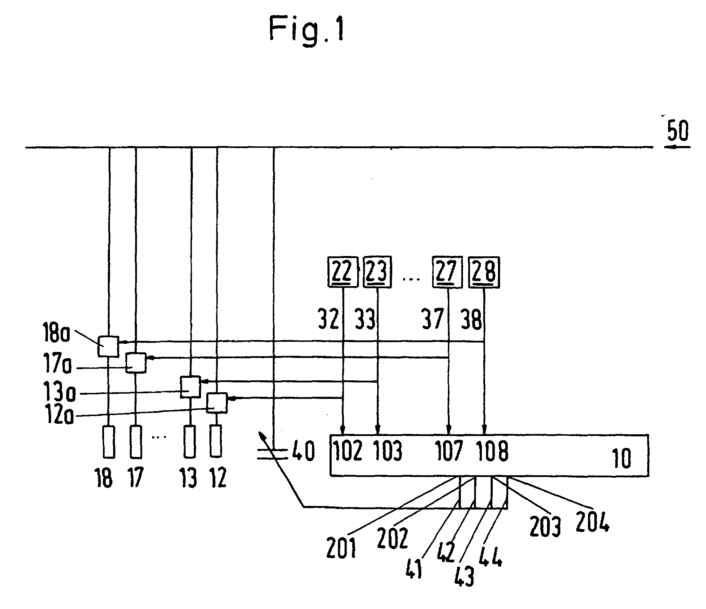

Fig. 1 zeigt eine Ausführungsform der erfindungsgemäßen Vorrichtung, die lediglich eine Blindleistungskompensationssteuerung umfaßt. Verbraucher 12 bis 18 in Form von Punktschweißmaschinen werden über Steuerleitungen 32 bis 38 und elektronische Schalter 12a bis 18a von Steuerungen 22 bis 28 zu- und abgeschaltet, um Schweißpunkte gemäß einem bestimmten Programmablauf in einer Produktionsstraße zu erzeugen. Schaltbefehle X2 bis X8 für die elektronischen Schalter 12a bis 18a werden über die Steuerleitungen 32 bis 38 gleichzeitig den Eingängen 102 bis 108 der erfindungsgemäßen Vorrichtung 10 zugeführt, von einer Erfassungseinrichtung erfaßt sowie von einer Auswerteeinrichtung ausgewertet. Das Auswerteergebnis wird von einer Ansteuereinrichtung in Schaltbefehle zum Zu- und Abschalten von vier Kompensationskondensatoren, die insgesamt mit dem Bezugszeichen 40 gekennzeichnet sind, über die Ausgänge 201 bis 204 der Vorrichtung 10 und die Ansteuerleitungen 41 bis 44 umgesetzt.

Die Schaltbefehle X2 bis X8 zum Steuern der einzelnen Punktschweißmaschinen werden in der Vorrichtung 10 so ausgewertet, daß als Ausgangssignal die Summe des Blindleistungsbedarfs aller eingeschalteten Punktschweißmaschinen entsteht:

$$A = Q2 \cdot X2 + Q3 \cdot X3 + ... + Q8 \cdot X8,$$

mit Q2 bis Q8 jeweiliger Blindleistungsbedarf,
X2 bis X8 Schaltbefehle (1 (Zuschalten) oder 0 (Abschalten)).

Da der Blindleistungsbedarf der einzelnen Punktschweißmaschinen recht genau bekannt ist, ist die Summe des Blindleistungsbedarfs aller eingeschalteten Punktschweißmaschinen näherungsweise identisch mit dem momentanen Gesamtblindleistungsbedarf $A_{ges}$, so daß gilt
$A_{ges} = A.$

Sofern die Kompensationsstufenleistungen QC1 bis QC4 gleichgroß sind, d.h. QC1 = QC2 = QC3 = QC4 = QC, müssen n = Ganzzahl ($A_{ges}$/QC + 0,5) Kompensationskondensatoren eingeschaltet werden. Über die Ansteuereinrichtung der Vorrichtung 10 wird dann diese Zahl von Kompensationskondensatoren zugeschaltet.

Wenn ein Kompensationskondensator eine Kompensationsstufenleistung QC1 = QC aufweist und mindestens zwei Kompensationskondensatoren eine jeweilige Kompensationsstufenleistung QC2 = QC3 = 2 · QC aufweisen, so beträgt die Gesamtzahl der zuzuschaltenden Kompensationskondensatoren n = Ganzzahl ($A_{ges}$/QC + 0,5), wobei die Zahl der Kompensationskondensatoren mit der Kompensationsstufenleistung (2 QC) n2 = Ganzzahl (n/2) und die Zahl der Kompensationskondensatoren mit der Kompensationsstufenleistung QC n1 = n - (2 · n2) beträgt. Die Ganzzahl-Funktion bewirkt, daß das Ergebnis des Quotienten $A_{ges}$/QC auf eine ganze Zahl abgerundet wird.

Um die Anzahl der notwendigen Schalter für die Kompensationskondensacoren gering zu halten und eine hohe Steuergenauigkeit zu erzielen, wird vorab der zu erwartende maximale Gesamtblindleistungsbedarf bestimmt und nachfolgend eine geeignete Abstufung der Kompensationsleistungen der Kompensationskondensatoren gewählt. Wenn z. B. eine Vorrichtung mit einer Kompensationstufenleistung von 25 kvar - d.h. einer maximalen Ungenauigkeit von ±12,5 kvar - eine Gesamtleistung von 275 kvar steuern soll, benötigt man bei einer Kompensationsstufenfolge von 1:2:4:4 nur vier elektronische Schalter (25 + 50 + 100 + 100 kvar). Bei der Kostenersparnis aufgrund einer geringen Anzahl von Schaltern ist auch zu berücksichtigen, daß die Mehrkosten bei einer größeren Blindleistung mehr als proportional steigen.

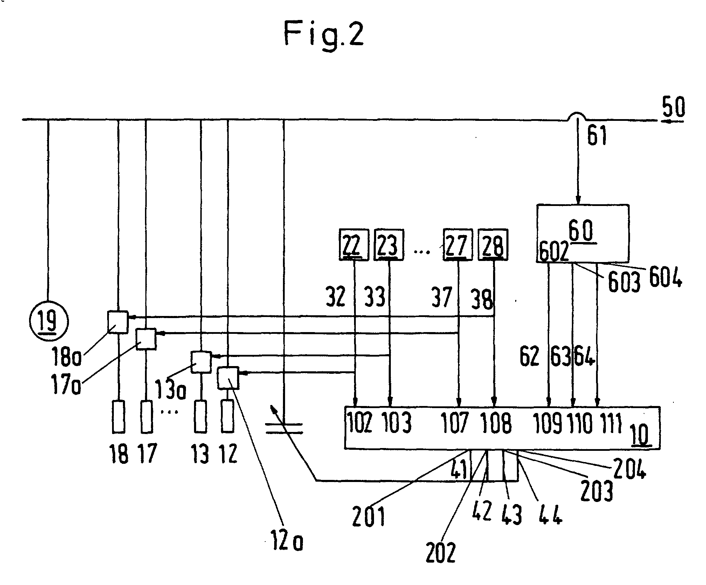

Fig. 2 zeigt eine zweite Ausführungsform der erfindungsgemäßen Vorrichtung, die gegenüber der Vorrichtung von Fig. 1 zusätzlich einen Blindleistungsregler 60 aufweist. Dies ist vorteilhaft, wenn der Blindleistungsbedarf der ansteuerbaren Verbraucher 12 bis 18 nicht genau bekannt ist bzw. schwankt sowie weitere Verbraucher, wie z.B. 19 (Motor, Lüfter etc.) von der Wechselstromnetzzuleitung 50 gespeist werden. Der Blindleistungsregler 60 mißt den verbleibenden Blindleistungsbedarf auf die übliche Art und Weise mit einem Stromwandler 61 in der Wechselstromnetzzuleitung 50 und gibt seine eigentlich für über elektronische Schalter zu- und abschaltbare Kompensationskondensatoren vorgesehenen Schaltbefehle Y1, Y2, Y3 über die Ausgänge 602 bis 604 und die Steuerleitungen 62 bis 64 sowie die Eingänge 109 bis 111 ebenfalls an die Erfassungseinrichtung der Vorrichtung 10. Diese zusätzlichen Schaltbefehle Y1 bis Y3 werden in der Auswerteeinrichtung der Vorrichtung 10 in der Form berücksichtigt, daß sie in die Bestimmung des Gesamtblindleistungsbedarfs $A_{ges}$ wie folgt eingehen:

$$A = Q2 \cdot X2 + Q3 \cdot X3 + ... + Q8 \cdot X8 + QR1 \cdot Y1 + QR2 \cdot$$

$$Y2 + QR3 \cdot Y3,$$

mit Q2 bis Q8 jeweiliger Blindleistungsbedarf der Punktschweißmaschinen,
X2 bis X8 Schaltbefehle,
QR1, QR2, QR3 Blindleistungen, auf die die Ausgänge 602. 603, 604 des Blindleistungsreglers 60 programmiert sind,
Y1, Y2, Y3 Schaltbefehl des Blindleistungsreglers 60.

Der Blindleistungsregler 60 ist so eingestellt, daß er den Mittelwert des verbleibenden Blindleistungsbedarfs mißt und mit einer relativ langsamen Zeitkonstante, normalerweise im Bereich von mehreren Sekunden bis Minuten, ausregelt.

Theoretisch könnte der zusätzliche Blindleistungsregler 60 separat von der Blindleistungssteuerungsvorrichtung vorgesehen sein. Es ist jedoch kostengünstiger, den Blindleistungskompensationsregler 60 in der Blindleistungskompensationssteuerungsvorrichtung zu integrieren. Zum einen gleicht sich nämlich der Blindstrombedarf der Blindleistungskompensationssteuerungs- und Regelungsanlagen aus, d.h. die Summe des Bedarfs der beiden Kompensationsvorrichtungen ist kleiner als die Summe der jeweiligen Bedarfsspitzen. Zum anderen ist die Anzahl der benötigten Schalter auf jeden Fall kleiner als die Anzahl der Schalter bei zwei getrennten Vorrichtungen. Um zu veranschaulichen, wie kostengünstig die erfindungsgemäße Vorrichtung ist, soll das folgende Beispiel dienen:

Angenommen, zwanzig Punktschweißmaschinen mit einem jeweiligen Blindleistungsbedarf im Bereich von 10 bis 30 kvar haben einen Gesamtblindleistungsbedarf A von ca. 220 kvar. Wenn die Blindleistungskompensationssteuerung ca. 90% verzögerungsfrei kompensieren soll, besteht ein Gesamtbedarf von 198 kvar. Die Blindleistungskompensationssteuerung muß daher auf 200 kvar dimensioniert werden. Eine Vorrichtung gemäß der Erfindung mit zwanzig gewichteten Eingängen addiert den Blindleistungsbedarf in zuzuschaltende Kompensationskondensatoren von insgesamt fünf Kompensationskondensatoren um, von denen zwei eine Kompensationsstufenleistung von 25 kvar, einer von 50 kvar und einer von 100 kvar aufweist. Weitere Verbraucher haben insgesamt einen durchschnittlichen Blindleistungsbedarf von ca. 80 kvar. Mit den zusätzlichen ca. 20 kvar Rest (restliche 10% von 220 kvar) ist eine 100 kvar-Kompensationsvorrichtung mit einer Stufung von 2 x 25 + 1 x 50 kvar normalerweise ausreichend. Werden beide Blindleistungsbedarfsvorgaben in der erfindungsgemäßen Vorrichtung addiert, dann ist eine Kompensationsvorrichtung mit 1 · 25 + 1 · 50 + 2 · 100 kvar völlig ausreichend. Diese Kompensationsvorrichtung ist mit vier elektronischen Schaltern wesentlich günstiger als die Kompensation jeder einzelnen Punktschweißmaschine mit zwanzig Schaltern und noch deutlich günstiger als eine gesteuerte Blindleistungskompensation mit vier Schaltern und einem zusätzlichen separaten Blindleistungsregler mit drei Schaltern.

Die in der vorangehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

Bezugszeichenliste

| | |
|---|---|
| 10 | Vorrichtung |
| 12 bis 18 | angesteuerte Verbraucher |
| 12a bis 18a | elektronische Schalter |

| 19 | weiterer Verbraucher |
| 22 bis 28 | Steuerung für Verbraucher |
| 32 bis 38 | Steuerleitung für elektronische Schalter |
| 40 | Kompensationskondensatoren |
| 41 bis 44 | Steuerleitung für Kompensationskondensatoren |
| 50 | Wechselstromnetzzuleitung |
| 60 | Blindleistungsregler |
| 61 | Stromwandler |
| 62 bis 64 | Steuerleitungen |
| 102 bis 111 | Eingänge |
| 201 bis 204 | Ausgänge |
| 602 bis 604 | Ausgänge |

**Patentansprüche**

1. Verfahren zur zentralen Blindleistungskompensation in einem ein- oder mehrphasigen Wechselstromnetz, das mindestens zwei Verbraucher (12, 13, ..., 17, 18), die über jeweils eine Steuerung zu- und abgeschaltet werden, sowie gegebenenfalls einen oder mehrere weiteren/weitere Verbraucher speist, mittels mindestens zweier über jeweils einen elektronischen Schalter (12a, 13a, ..., 17a, 18a) zu- und abschaltbarer Kompensationskondensatoren (40) mit einer jeweiligen Kompensationsstufenleistung QC1 bzw. QC2,
**dadurch gekennzeichnet, daß**

(a) vorab der Blindleistungsbedarf Q2, Q3, ..., Q8 jedes angesteuerten Verbrauchers und der maximale Gesamtblindleistungsbedarf unter Berücksichtigung des bzw. der gegebenenfalls weiteren Verbrauchers/Verbraucher zumindest näherungsweise bestimmt sowie eine zur Kompensation der maximalen Gesamtblindleistung geeignete Anzahl von Kompensationskondensatoren mit einer jeweiligen Kompensationsstufenleistung QC1 bzw. QC2 bzw. QC3 bzw. QC4 gewählt wird,

(b) die momentanen Schaltbefehle X2, X3, ..., X8 der Steuerungen für die angesteuerten Verbraucher erfaßt und damit der momentane Gesamtblindleistungsbedarf $A_{ges}$ zumindest näherungsweise mittels des momentanen Blindleistungsbedarfs A der angesteuerten Verbraucher wie folgt bestimmt wird

$$A_{ges} = A = Q2 \cdot X2 + Q3 \cdot X3 + ... + Q8 \cdot X8,$$

mit X2, X3, ..., X8 = 1 (Zuschalten) oder 0 (Abschalten),

(c) eine Kombination der Kompensationskondensatoren (40) über die jeweiligen elektronischen Schalter zugeschaltet wird, deren Summe der Kompensationsstufenleistungen QC1, QC2, QC3, QC4 dem in Schritt (b) bestimmten momentanen Gesamtblindleistungsbedarf $A_{ges}$ am nächsten kommt, und

(d) die Schritte (b) und (c) zur Anpassung an den variierenden Gesamtblindleistungsbedarf $A_{ges}$ wiederholt werden.

2. Verfahren nach Anspruch 1, **dadurch gekennzeichnet, daß** in Schritt (b) zusätzlich ein Blindleistungsregler (60) mit mindestens zwei Ausgängen (602, 603, 604) die normalerweise jeweils zur Ansteuerung eines Kompensationskondensators über einen jeweiligen Schalter vorgesehen und hinsichtlich der Kompensationsleistung QR1 bzw. QR2 jedes Kompensationskondensators programmierbar sind, verwendet wird, der auf herkömmliche Weise über einen Stromwandler (61) in der Wechselstromnetzzuleitung (50) den. Mittelwert des verbleibenden Blindleistungsbedarfs mißt,
die momentanen Schaltbefehle Y1, Y2, die normalerweise zur Ansteuerung einer zur Kompensation des von dem Blindleistungsregler ermittelten Mittelwerts des verbleibenden Blindleistungsbedarfs geeigneten Kombination der mindestens zwei Kompensationskondensatoren dienen, über die mindestens zwei Ausgänge (62, 63, 64) erfaßt und bei der Bestimmung des momentanen Gesamtleistungsbedarfs $A_{ges}$ wie folgt berücksichtigt werden

$$A_{ges} = A + QR1 \cdot Y1 + QR2 \cdot Y2,$$

mit Y1, Y2 = 1 (Zuschalten) oder 0 (Abschalten).

3. Verfahren nach Anspruch 1 oder 2, **dadurch gekennzeichnet, daß** in Schritt (a) Kompensationskondensatoren mit gleicher Kompensationsstufenleistung (QC1 = QC2 = QC3 = QC4 = QC) gewählt und in Schritt (c) n Kompensationskondensatoren mit n = Ganzzahl ($A_{ges}$/QC + 0,5) zugeschaltet werden.

4. Verfahren nach Anspruch 1 oder 2, **dadurch gekennzeichnet, daß** in Schritt (a) ein Kompensationskondensator mit einer Kompensationsstufenleistung QC1 = QC und mindestens zwei Kompensationskondensatoren mit QC2 = QC3 = 2· QC gewählt und in Schritt (c) n2 = Ganzzahl (n/2) Kompensationskondensacoren mit der Kompensationsstufenleistung 2· QC und n1 = n - (2 · n2), mit n = Gesamtkompensationsstufenzahl = Ganzzahl ($A_{ges}$/QC + 0,5) zugeschaltet werden.

5. Verfahren nach einem der Ansprüche 1, 2 oder 4, **dadurch gekennzeichnet, daß** in Schritt (a) drei Kompensationskondensatoren mit einer Abstufung der Kompensationsstufenleistungen von 1:2:2 gewählt werden.

6. Verfahren nach einem der Ansprüche 1, 2 oder 4, **dadurch gekennzeichnet, daß** in Schritt (a) drei Kompensationskondensatoren mit einer Abstufung der Kompensationsstufenleistungen von 1:2:4 gewählt werden.

7. Verfahren nach einem der Ansprüche 1, 2 oder 4, **dadurch gekennzeichnet, daß** in Schritt (a) vier Kompensationskondensatoren mit einer Abstufung der Kompensationsstufenleistungen von 1:2:4:4 gewählt werden.

8. Vorrichtung zur Durchführung des Verfahrens nach einem der vorangehenden Ansprüche, mit mindestens zwei über jeweils einen ansteuerbaren elektronischen Schalter (12a, 13a, ..., 17a, 18a) zu- und abschaltbaren Kompensationskondensatoren (40) mit einer jeweiligen Kompensationsstufenleistung QC1 bzw. QC2, **gekennzeichnet durch**

    - eine Erfassungseinrichtung (10) zur Erfassung der Schaltbefehle X2, X3 von mindestens zwei Steuerungen zur Zu- und Abschaltung jeweils eines Verbrauchers,

    - eine Auswerteeinrichtung (10) zur Auswertung der Schaltbefehle X2, X3, ..., X8 hinsichtlich des zumindest näherungsweisen momentanen Gesamtblindleistungsbedarfs $A_{ges}$ und nachfolgenden Auswahl einer zur Kompensation des ermittelten momentanen Gesamtblindleistungsbedarfs $A_{ges}$ geeigneten Kombination von zuzuschaltenden Kompensationskondensatoren und

    - eine Ansteuereinrichtung (10) zur Ansteuerung der ansteuerbaren elektronischen Schalter für die Kompensationskondensatoren entsprechend der von der Auswerteeinrichtung getroffenen Auswahl.

9. Vorrichtung nach Anspruch 8, **gekennzeichnet durch** einen Blindleistungsregler mit einem Stromwandler (61) zum Messen des verbleibenden Blindleistungsbedarfs in der Wechselstromnetzzuleitung (50) und mindestens zwei Ausgängen (201, 202, 203, 204) zur Ansteuerung jeweils eines Schalters zur Zu- und Abschaltung jeweils eines Kompensationskondensators, wobei die Ausgänge hinsichtlich der jeweiligen Kompensationsstufenleistungen QR1 bzw. QR2 programmierbar und zur zusätzlichen Erfassung der Schaltbefehle Y1, Y2 des Blindleistungsreglers (60) **durch** die Erfassungseinrichtung und nachfolgenden Berücksichtigung bei der Auswertung mit derselben verbunden sind.

10. Vorrichtung nach Anspruch 8 oder 9, **dadurch gekennzeichnet, daß** die Summe der Kompensationsstufenleistungen QC1, QC2, QC3, QC4 aller Kompensationskondensatoren der maximalen Summe des Blindleistungsbedarfs aller ansteuerbaren Verbraucher entspricht.

11. Vorrichtung nach Anspruch 8 oder 9, **dadurch gekennzeichnet, daß** die Summe der Kompensationsstufenleistungen QC1, QC2, QC3, QC4 aller Kompensationskondensatoren der maximalen Summe des Blindleistungsbedarfs aller ansteuerbaren und weiterer Verbraucher entspricht.

12. Vorrichtung nach einem der Ansprüche 8 bis 11, **dadurch gekennzeichnet, daß** die Kompensationsstufenleistungen QC1, QC2, QC3, QC4 der Kompensationskondensatoren gleich groß sind.

13. Vorrichtung nach einem der Ansprüche 8 bis 11, **dadurch gekennzeichnet, daß** ein Kompensationskondensator eine Kompensationsstufenleistung QC1 = QC aufweist und mindestens zwei Kompensationskondensatoren eine jeweilige Kompensationsstufenleistung QC2 = QC3 = 2· QC aufweisen.

**14.** Vorrichtung nach einem der Ansprüche 8 bis 11 und 13, **gekennzeichnet durch** drei Kompensationskondensatoren mit einer Abstufung der Kompensationsstufenleistungen von 1:2:2.

**15.** Vorrichtung nach einem der Ansprüche 8 bis 11 und 13, **gekennzeichnet durch** drei Kompensationskondensatoren mit einer Abstufung der Kompensationsstufenleistungen von 1:2:4.

**16.** Vorrichtung nach einem der Ansprüche 8 bis 11, gekennzeichnet durch vier Kompensationskondensatoren mit einer Abstufung der Kompensationsstufenleistungen von 1:2:4:4.

**17.** Vorrichtung nach einem der Ansprüche 8 bis 16, **dadurch gekennzeichnet, daß** die programmierbaren Kompensationsstufenleistungen QR1, QR2 des Blindleistungsreglers jeweils nicht größer als die kleinste Kompensationsstufenleistung QC1 bzw. QC2 bzw. QC3 bzw. QC4 der Kompensationskondensatoren sind.

**18.** Vorrichtung nach Anspruch 17, **dadurch gekennzeichnet, daß** die Kompensationsstufenleistungen QR1, QR2 abgestuft sind.

**Claims**

**1.** A method of central reactive power compensation in a single or multi-phase AC network supplying at least two loads (12, 13, ... 17, 18) switchable on and off via respective controls and one or more additional loads if required, via at least two compensation capacitors (40) switchable on and off by respective electronic switches (12a, 13a, ... 17a, 18a) and having a power QC1, QC2 respectively at each compensation step, **characterised in that**

(a) the reactive power requirement Q2, Q3,... Q8 of each actuated load and the maximum total reactive power requirement allowing for any additional loads is at least approximately determined and a number of compensation capacitors having a compensation step power QC1 QC2, QC3, QC4 respectively are chosen so as to compensate the maximum total reactive power,

(b) the instantaneous switching instructions X2, X3, ... X8 of the controls for the actuated loads are detected and the instantaneous total reactive power requirement $A_{ges}$ is calculated at least approximately therefrom via the instantaneous reactive power requirement A of the actuated loads as follows:

$$A_{ges} = A = Q2 \cdot X2 + Q3 \cdot X3 + ... + Q8 \cdot X8,$$

with X2, X3, ..., X8 = 1 (switching on) or 0 (switching off),

(c) a combination of the compensation capacitors (40) is switched on via the respective electronic switches, the sum of the compensation step power QC1, QC2, QC3, QC4 whereof comes nearest to the instantaneous total reactive power requirement $A_{ges}$ calculated in step (b), and

(d) steps (b) and (c) are repeated for adaptation to the varying total reactive power requirement $A_{ges}$.

**2.** A method according to claim 1, **characterised in that** in step (b) use is made of an additional reactive power regulator (60) with at least two outputs (602, 603, 604) normally provided for actuating respective compensation capacitors via respective switches and programmable with respect to the compensation power QR1, QR2 of each compensation capacitor, and the regulator measures the average remaining reactive power requirement in conventional manner via a current transformer (61) in the AC network lead (50),
the instantaneous switching instructions Y1, Y2 normally used for actuating a combination of the at least two compensation capacitors suitable for compensating the average remaining reactive power requirement determined by the reactive power regulator are detected via the at least two outputs (62, 63, 64) and taken into account when determining the instantaneous total power requirement Ages, as follows:

$$A_{ges} = A + QR1 \cdot Y1 + QR2 \cdot Y2,$$

with Y1, Y2 = 1 (switching on) or 0 (switching off).

3. A method according to claim 1 or 2, **characterised in that** in step (a) compensation capacitors are chosen with the same compensation step power (QC1 = QC2 = QC3 = QC4 = QC) and
in step (c) n compensation capacitors with n = an integer $(A_{ges}/QC + 0.5)$ are switched on.

4. A method according to claim 1 or 2, **characterised in that** in step (a) a compensation capacitor with a compensation step power QC1 = QC and at least two compensation capacitors with QC2 = QC3 = 2 · QC are chosen and in step (c) n2 = an integral number (n/2) of compensation capacitors with power 2·QC per compensation step and n1 = n - (2 · n2), with n = total number of compensation steps = integral number $(A_{ges}/QC + 0.5)$ are switched on.

5. A method according to any of claims 1, 2 or 4, **characterised in that** in step (a) three compensation capacitors are chosen with compensation step power in the proportions 1:2:2.

6. A method according to any of claims 1, 2 or 4, **characterised in that** in step (a) three compensation capacitors are chosen with compensation step power in the proportions 1:2:4.

7. A method according to any of claims 1, 2 or 4, **characterised in that** in step (a) four compensation capacitors are chosen with compensation step power in the proportions 1:2:4:4.

8. A device for working the method according to any of the preceding claims, comprising at least two compensation capacitors (40) switchable on and off via respective actuatable electronic switches (12a, 13a, ..., 17a, 18a) with power QC1, QC2 respectively at each compensation step, **characterised by**

   - a detection device (10) for detecting the switching instructions X2, X3 from at least two controls for switching a respective load on and off,

   - an evaluating device (10) for evaluating the switching instructions X2, X3, ..., X8 with respect to the at least approximate instantaneous total reactive power requirement $A_{ges}$ and subsequent selection of a combination of switchable compensation capacitors suitable for compensating the detected instantaneous total reactive power requirement $A_{ges}$ and

   - an actuating device (10) for actuating the actuatable electronic switches for the compensation capacitors in accordance with the selection made by the evaluating device.

9. A device according to claim 8, **characterised by** a reactive power regulator comprising a current transformer (61) for measuring the remaining reactive power requirement in the AC circuit lead (50) and at least two outputs (201, 202, 203, 204) for actuating respective switches for switching respective compensation capacitors on and off, wherein the outputs are programmable with regard to the compensation step power QR1, QR2 respectively and are connected to the detection device in order additionally to detect the switching instructions Y1, Y2 from the reactive power regulator (60) via the detection device and subsequently take them into account during the evaluation,

10. A device according to claim 8 or 9, **characterised in that** the sum of the compensation step power QC1, QC2, QC3, QC4 of all compensation capacitors is equal to the maximum sum of the reactive power requirement of all actuatable loads.

11. A device according to claim 8 or 9, **characterised in that** the sum of the compensation step power QC1, QC2, QC3, QC4 of all compensation capacitors is equal to the maximum sum of the reactive power requirement of all actuatable and additional loads.

12. A device according to any of claims 8 to 11, **characterised in that** the compensation step power QC1, QC2, QC3, QC4 of each compensation capacitor is equal.

13. A device according to any of claims 8 to 11, **characterised in that** a compensation capacitor has a compensation step power QC1 = QC and at least two compensation capacitors each have a compensation step power QC2 = QC3 = 2·QC.

**14.** , A device according to any of claims 8 to 11 and 13, **characterised by** three compensation capacitors with compensation step power in the proportion 1:2:2.

**15.** A device according to any of claims 8 to 11 and 13, **characterised by** three compensation capacitors with compensation step power in the proportion 1:2:4.

**16.** A device according to any of claims 8 to 11, **characterised by** four compensation capacitors with compensation step power in the proportion 1:2:4:4.

**17.** A device according to any of claims 8 to 16, **characterised in that** the programmable compensation step power QR1, QR2 of the reactive power regulator in each case is not greater than the minimum compensation step power QC1, QC2, QC3, QC4 of the compensation capacitors.

**18.** A device according to claim 17, **characterised in that** the compensation step power QR1, QR2 is graduated.

**Revendications**

**1.** Procédé pour la compensation centralisée de la puissance réactive, dans un réseau à courant alternatif monophasé ou polyphasé, lequel alimente au moins deux consommateurs (12, 13 ... 17, 18), qui sont connectés ou déconnectés par un système de commande respectif et le cas échéant un ou plusieurs autre/autres consommateur(s), à l'aide d'au moins deux condensateurs de compensation (40) avec une puissance d'échelon de compensation QCI ou QC2 qui sont respectivement connectables ou déconnectables au moyen d'un interrupteur électronique (120, 130 ... 170, 180),

**caractérisé en ce que**

(a) le besoin en puissance réactive Q2, Q3, ..., Q8 de chaque consommateur activé et le besoin maximal en puissance réactive totale sont déterminés préalablement de manière au moins approximative, le cas échéant sous considération de l'autre consommateur ou des autres consommateurs et un nombre approprié de condensateurs pour la compensation de la puissance réactive totale maximale est sélectionné avec une puissance d'échelon respective QC1 ou QC2 ou QC3 ou QC4,

(b) les ordres instantanés de commutation x2, x3, ..., x8 des systèmes de commande pour les consommateurs activés sont enregistrés et de ce fait, le besoin instantané en puissance réactive totale $A_{ges}$ est déterminé au moins approximativement de la manière suivante, à l'aide du besoin instantané en puissance réactive A des consommateurs activés

$$A_{ges} = A = Q2 . X2 + Q3 . X3 + ... Q8 . X8,$$

Avec X2, X3, ..., X8 = 1 (connecter) ou 0 (déconnecter),

(c) une combinaison des condensateurs de compensation (40) est connectée par l'intermédiaire des commutateurs électroniques respectifs, dont la somme des puissances d'échelons de compensation QC1, QC2, QC3, QC4 est la plus proche du besoin instantané en puissance réactive totale $A_{ges}$, déterminé au cours de l'étape (b) et

(d) les étapes (b) et (c) sont répétées pour permettre l'adaptation au besoin variable en puissance réactive totale $A_{ges}$.

**2.** Procédé selon la revendication 1, **caractérisé en ce qu'**au cours de l'étape (b), on utilise en supplément un régulateur de puissance réactive (60), avec au moins deux sorties (002, 003, 007), qui sont normalement prévues respectivement pour l'activation d'un condensateur de compensation par l'intermédiaire d'un commutateur respectif et qui sont programmables au niveau de la puissance de compensation QR1 ou QR2 de chaque condensateur de compensation, ledit régulateur mesurant de manière usuelle la valeur moyenne du besoin résiduel en puissance réactive, par l'intermédiaire d'un transformateur de courant (61) dans la conduite d'alimentation du réseau de courant alternatif,

les ordres de commutation instantanés Y1, Y2 qui servent normalement à activer une combinaison appropriée pour la compensation de la valeur moyenne du besoin résiduel en puissance réactive déterminée par le régulateur de puissance réactive d'au moins les deux condensateurs de compensation, sont enregistrés par l'intermédiaire d'au moins les deux sorties (62, 63, 64) et lors de la détermination du besoin instantané en puissance totale $A_{ges}$ sont pris en compte de la manière suivante :

$$A_{ges} = A + QR1 . Y1 + QR2 . Y2,$$

Avec Y1, Y2 = 1 (connecter) ou 0 (déconnecter).

3. Procédé selon l'une quelconque des revendications 1 ou 2, **caractérisé en ce qu'**au cours de l'étape (a), des condensateurs de compensation présentant une puissance d'échelon de compensation identique (QC1= QC2 = QC3 = QC4 = QC) sont choisis et
au cours de l'étape (c ), n condensateurs de compensation avec
n = nombre entier ($A_{ges}$/QC + 0,5) sont connectés.

4. Procédé selon l'une quelconque des revendications 1 ou 2, **caractérisé en ce qu'**au cours de l'étape (a), un condensateur de compensation avec une puissance d'échelon de compensation QC1 = QC et au moins deux condensateurs de compensation avec QC2 = QC3 = 2 . QC sont sélectionnés et au cours de l'étape (c) n2 = nombre entier (n/2) condensateurs de compensation avec la puissance d'échelon de compensation 2 . QC et n1 = n - (2 . n2) sont connectés avec n = valeur totale des échelons de compensation = nombre entier ($A_{ges}$/QC + 0,5).

5. Procédé selon l'une quelconque des revendications 1, 2 ou 4, **caractérisé en ce qu'**au cours de l'étape (a), trois condensateurs de compensation sont sélectionnés avec un échelonnement des puissances d'échelons de compensation de 1 :2 : 2.

6. Procédé selon l'une quelconque des revendications 1, 2 ou 4, **caractérisé en ce qu'**au cours de l'étape (a), trois. condensateurs de compensation sont sélectionnés avec un échelonnement des puissances d'échelons de compensation de 1 : 2 : 4.

7. Procédé selon l'une quelconque des revendications 1, 2 ou 4, **caractérisé en ce qu'**au cours de l'étape (a) quatre condensateurs de compensation sont sélectionnés avec un échelonnement des puissances d'échelons de compensation de 1 : 2 : 4 : 4.

8. Dispositif pour la réalisation du procédé selon l'une quelconque des revendications précédentes, avec au moins deux condensateurs de compensation (40)respectivement connectables ou déconnectables par l'intermédiaire d'un commutateur électronique activable (120, 130, ..., 170, 180), avec une puissance d'échelon de compensation respective QC1 ou QC2, **caractérisé par**

- un dispositif d'enregistrement (10) pour enregistrer les ordres de commutation X2, X3 d'au moins deux systèmes de commande pour la connexion ou la déconnexion d'un consommateur respectif,
- un dispositif d'évaluation (10) pour évaluer les ordres de commutation X2, X3, ..., X8, au niveau du besoin instantané au moins approximatif en puissance réactive totale Ages et pour sélectionner ensuite une combinaison appropriée de condensateurs de compensation qui doivent être connectés et
- un dispositif d'activation (10) pour activer les commutateurs électroniques activables pour les condensateurs de compensation, en fonction de la sélection opérée par le dispositif d'évaluation.

9. Dispositif selon la revendication 8, **caractérisé par** un régulateur de puissance réactive avec un transformateur de courant (62) pour mesurer le besoin résiduel en puissance réactive dans la conduite d'alimentation du réseau de courant alternatif (50) et par au moins deux sorties (201, 202, 203, 204) pour l'activation de respectivement un commutateur pour la connexion ou la déconnexion de respectivement un condensateur de compensation, les sorties étant programmables au niveau des puissances respectives des échelons de compensation QR1 ou QR2 et étant reliées avec le dispositif d'enregistrement pour l'enregistrement supplémentaire des ordres de commutation Y1, Y2 du régulateur de puissance réactive (60) par ce dernier et pour leur prise en compte suivante lors de l'évaluation.

**10.** Dispositif selon l'une quelconque des revendications 8 ou 9, **caractérisé en ce que** la somme des puissances des échelons de compensation QC1, QC2, QC3, QC4 de tous les condensateurs de compensation correspond à la somme maximale du besoin en puissance réactive de tous les consommateurs activables.

**11.** Dispositif selon l'une quelconque des revendications 8 ou 9, **caractérisé en ce que** la somme des puissances des échelons de compensation QC1, QC2, QC3, QC4 de tous les condensateurs de compensation correspond à la somme maximale du besoin en puissance réactive de tous les consommateurs activables et de tous les autres consommateurs.

**12.** Dispositif selon l'une quelconque des revendications 8 à 11, **caractérisé en ce que** les puissances des échelons de compensation QC1, QC2, QC3, QC4 des condensateurs de compensation sont de valeurs égales.

**13.** Dispositif selon l'une quelconque des revendications 8 à 11, **caractérisé en ce qu'**un condensateur de compensation présente une puissance d'échelons de compensation QC1 = QC et qu'au moins deux condensateurs de compensation présentent une puissance d'échelons de compensation respective QC2 = QC3 = 2. QC.

**14.** Dispositif selon l'une quelconque des revendications 8 à 11 et 13, **caractérisé par** trois condensateurs de compensation avec un échelonnement des puissances d'échelons de compensations de 1 : 2 : 2.

**15.** Dispositif selon l'une quelconque des revendications 8 à 11 et 13, **caractérisé par** trois condensateurs de compensation, avec un échelonnement des puissances d'échelons de compensation de 1 : 2 : 4.

**16.** Dispositif selon l'une quelconque des revendications 8 à 11, **caractérisé par** quatre condensateurs de compensation avec un échelonnement des puissances d'échelons de compensation de 1 : 2 : 4 : 4.

**17.** Dispositif selon l'une quelconque des revendications 8 à 16, **caractérisé en ce que** les puissances programmables des échelons de compensation QR1, QR2 du régulateur de puissance réactive ne sont respectivement pas plus élevées que la plus petite puissance d'échelon de compensation QC1 ou QC2 ou QC3 ou QC4 des condensateurs de compensation.

**18.** Dispositif selon la revendication 17, **caractérisé en ce que** les puissances d'échelons de compensations QR1, QR2 sont échelonnées.

# Fig.1

# Fig.2